(19) Europäisches Patentamt / European Patent Office / Office européen des brevets

(11) **EP 2 677 323 A1**

(12) **EUROPEAN PATENT APPLICATION**

(43) Date of publication:
**25.12.2013 Bulletin 2013/52**

(51) Int Cl.:
*G01P 3/66* (2006.01)   *G08G 1/042* (2006.01)

(21) Application number: **12172521.2**

(22) Date of filing: **19.06.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Geveko ITS A/S**
**5900 Rudkøbing (DK)**

(72) Inventors:
• **Hostettler, Roland**
  **977 52 Luleå (SE)**
• **Birk, Wolfgang**
  **954 35 Gammelstad (SE)**
• **Obertov, Dmitrii**
  **196657 St. Petersburg, Kolpino (RU)**
• **Bardov, Vladimir**
  **198330 St. Petersburg (RU)**

(74) Representative: **Andersson, Mikael Per Robert**
**Awapatent AB**
**Box 1066**
**251 10 Helsingborg (SE)**

(54) **Vehicle speed determination**

(57) This application discloses method for determining a speed V of a vehicle passing a magnetometer. The method comprises: generating a magnetic signal B(t), determining a function $\alpha(t)$, wherein $\alpha$ is the argument of a polar representation of a projection of the magnetic field B on a plane, determining a magnetic time based on the function $\alpha(t)$; determining a magnetic class of the passing vehicle by comparing at least a part of the generated magnetic signal B(t) against a plurality of predetermined reference magnetic signals, determining the speed V of the vehicle based on the magnetic time of the vehicle, and a reference magnetic time and a reference speed corresponding to the determined magnetic class. The application also discloses a method for classifying a vehicle based on the determined speed V. Further, the application discloses a sensor device for performing the disclosed methods.

Generating a magnetic signal B(t) — 101

Determining a function $\alpha(t)$ — 102

Determining a magnetic time $T_m$ — 103

Determining a magnetic class of the passing vehicle — 104

Determining the speed V of the passing vehicle — 105

*Fig. 1*

**Description**

TECHNICAL FIELD

The present invention lies within the field of traffic monitoring, in particular within the field of vehicle speed determination and vehicle classification.

BACKGROUND OF THE INVENTION

Road traffic monitoring is an important tool for traffic management and for infrastructure development. One common traffic parameter which is desired to measure is the speed of a vehicle. Speed information can be used for e.g. collecting traffic statistics for a particular road, for conducting speed regulation watches, or for classifying vehicles passing on a roadway.

A common technique for measuring a vehicle's speed is to place a pair of signal generators, such as cables, rumble strips, or rods, across a roadway. When a vehicle passes over the signal generators, signals is generated by the signal generators. Based on the signals, the passing time for the vehicle between the pair of signal generators may be determined. By knowing the distance between the signal generators, the speed of the vehicle is determined.

There also exist sensors which are arranged by the roadway for contactless measurement of a vehicle's speed. Examples of such sensors are speed cameras, i.e. optical sensors, and manually operated radar sensors.

However, most existing techniques have drawbacks such as large energy consumption, being expensive, requiring manual handling, and having a large error of the estimation. Thus, there is a need for an improved technique for determining the speed of a vehicle, and further for obtaining more information about the vehicle.

SUMMARY OF THE INVENTION

It is an object of the present invention to overcome drawbacks of known techniques, and to provide an improved method for obtaining information about a vehicle in traffic. In particular, it is an object of the present invention to provide an automatic method for determining the speed of a vehicle in an efficient manner.

According to a first aspect of the invention, this and other objects are achieved by a method for determining a speed V of a vehicle passing a magnetometer, the method comprising: generating, during a measuring time T and by the magnetometer, a magnetic signal B(t) by measuring a magnetic field B during the measuring time T, the magnetic field B comprising a magnetic field of the passing vehicle; determining a function $\alpha(t)$ of an angle $\alpha$ over the measuring time T, wherein $\alpha$ is the argument of a polar representation of a projection of the magnetic field B on a plane in which a first plane vector x and a second plane vector y is arranged, wherein the first plane vector x and the second plane vector y are mutually orthogonal, and wherein the first plane vector x is arranged at least partly in a travelling direction of the passing vehicle; determining a magnetic time $T_m$ defined as $T_m = T_{\lambda 2} - T_{\lambda 1}$ where $\lambda_1 = \alpha(T_{\lambda 1})$ and $\lambda_2 = \alpha(T_{\lambda 2})$, and where $\lambda_1$ is a first limit angle and $\lambda_2$ is a second limit angle; determining a magnetic class of the passing vehicle by comparing at least a part of the generated magnetic signal B(t) against a plurality of predetermined reference magnetic signals in a database, wherein each predetermined reference magnetic signal represents a specific magnetic class; determining the speed V of the vehicle as $V = (T_{m\_ref} \cdot V_{ref})/T_m$ where $T_{m\_ref}$ is a reference magnetic time of the predetermined reference magnetic signal of the determined magnetic class, and $V_{ref}$ is a reference speed of the predetermined reference magnetic signal of the determined magnetic class.

Thus, the speed of the passing vehicle is determined based on its magnetic field. The magnetic field B, comprising at least the magnetic field of the vehicle, is measured at a measuring point which is fixed relative to the passing vehicle. The measured magnetic field B may comprise further magnetic fields, such as the earth's magnetic field, or other vehicles' magnetic fields. The total present magnetic field at the measuring point may be measured, or a part of the present magnetic field, comprising at least the magnetic field of the passing vehicle, may be measured.

Since the passing vehicle is moving, its magnetic field is moving along with it. The magnetic field B at the measuring point will thus change during the measuring time T, when the passing vehicle, and thus its magnetic field, is passing the measuring point. Hence, the magnetic signal B(t) comprises a change of the magnetic field B during the measuring time T, i.e. from t=0 to t=T. The change originates substantially from the magnetic field of the passing vehicle.

The magnetic field of the passing vehicle represents the magnetic field of a total magnetic moment of the passing vehicle, where the total magnetic moment is the superposition of *n* individual magnetic moments. This model is explained in detail in the article "Magnetic Sensors for Traffic Detection" by Johansson et al. (Technical Report, IMEGO, Sweden, 2006). Thus, the magnetic field represents the magnetic impact which the passing vehicle has on its surroundings.

The magnetic field B may be modeled as a vector. The magnetic field vector has a length and a direction. In order to determine the function $\alpha(t)$, the magnetic field vector is projected on a plane in which the first vector x and the second vector y are arranged. Thus, the orientation of the plane is defined by the first and the second vectors x and y. The first vector x is at least partly arranged in the travelling direction of the passing vehicle. The plane may be arranged differently in different embodiments.

The angle $\alpha$ is the argument of the polar representation of the projection of the vector for the magnetic field B on the plane. Thus, the function $\alpha(t)$ is defined as the argument of the polar representation of the projection of the magnetic field vector on the plane, as seen over the measuring time T.

The function $\alpha(t)$ has in general the characteristics of an *arctan* function. Especially, the angle $\alpha$ goes from a first angle at to a second angle, wherein the second angle has the reverse sign relative to the first angle.

The passing vehicle is classified according to its magnetic properties. This is achieved by comparing at least a part of the magnetic signal B(t) with a database comprising predetermined reference magnetic signals. Each reference magnetic signal corresponds to a previously made measurement on a reference vehicle. For each class in the database, a reference magnetic signal corresponding to a reference vehicle is stored, together with the speed of the reference vehicle. One class may comprise more than one predetermined reference magnetic signal. The magnetic classification is thus based on the form of the magnetic signal. Magnetic signals of one class have similar magnetic signal form.

The magnetic signal B(t) may have been processed before the comparison. For example, the magnetic signal may have been smoothed and/or filtered. Smoothing may be achieved by e.g. replacing a number of consecutive points in the magnetic signal B(t) by their average value. Filtering may be achieved by low pass filtering or wavelet filtering, in order to reduce noise and/or other interferences.

Each reference magnetic signal together with the speed of each corresponding reference vehicle have been measured and arranged in the database prior to determining the passing vehicle's speed. The speed of each reference vehicle may have been determined using conventional methods, such as a radar technique, and put into the database manually. The database may alternatively, or also, comprise reference magnetic signals which correspond to magnetic signals for previous passing vehicles. The corresponding speed may in that case be determined by the method disclosed herein. After determining the speed of the passing vehicle, the magnetic signal and speed may be stored in the database in its magnetic class. Thus, the database may build itself up over time.

Magnetic time $T_m$ is defined as the time during which the angle $\alpha$ goes from the first limit angle $\lambda_1$ to the second limit angle $\lambda_2$ in the function $\alpha(t)$. A reference magnetic time $T_{m\_ref}$ for a reference magnetic signal has been determined in advance using the same $\lambda_1$ and $\lambda_2$ as used when determining the magnetic time for the passing vehicle.

The method for determining the speed V of a passing vehicle is based on the conclusion that vehicles of the same magnetic class have the same magnetic length. The magnetic length is defined as the magnetic time multiplied with the speed of the vehicle. Hence, a magnetic length $L_m$ for the magnetic signal B(t) of the passing vehicle is the same as for a reference magnetic length $L_{m\_ref}$ of a predetermined reference magnetic signal of the class which the passing vehicle belongs to. By determining the magnetic time $T_m$ and magnetic class of the passing vehicle, its speed V can be determined by $V = (T_{m\_ref} \cdot V_{ref})/T_m$, since $L_{m\_ref} = L_m$. The reference magnetic time $T_{m\_ref}$ and reference speed $V_{ref}$ are the magnetic time and speed corresponding to the predetermined reference magnetic signal for the determined magnetic class of the passing vehicle. The reference magnetic time $T_{m\_ref}$ and reference speed $V_{ref}$ are extracted from or determined based on information in the database, after the magnetic class of the passing vehicle has been determined. The database may comprise the reference magnetic time $T_{m\_ref}$, the reference magnetic length $L_{m\_ref}$, and/or the reference speed $V_{ref}$, whereby the required parameters for determining the speed V may be extracted or determined based on the parameters present in the database.

Preferably, the reference magnetic signals have been measured using the same sensor arrangement and/or measuring conditions as used when generating the magnetic signal B(t).

By at least a part of the magnetic signal B(t) is meant that the magnetic signal B(t) during at least a part of the total measuring time is compared, or that a component of the magnetic signal B(t) is compared. The component could be for example the projection of the magnetic signal B(t) on a vector in a coordinate system, such as the vector x or the vector y.

The present method for determining the speed of the passing vehicle provides an easy-implemented method which may be utilized by a magnetometer and accompanying circuits and processors. Thus, the method may be implemented in a sensor device which is small and which may be easily arranged without disturbing the passing vehicle or its driver. Further, the driver may not even notice the sensor device, and thereby the sensor device does not take away the driver's attention from the road and any other traffic, which is important for maintaining a the traffic safety. Furthermore, the method may be performed without any manual handling, making the method both cost efficient and safe.

In particular, it is advantageous that the method may be performed in a single sensor node, e.g. by a sensor device comprising the magnetometer. By having only one sensor node, many advantages are gained, e.g. the need for service is reduced, any errors due to one node moving relative to the other node is removed, the need for any communication between the nodes is removed, the power consumption is reduced, the required space is reduced, and the system may become less expensive.

The magnetic signal B(t) may comprise a first magnetic component $B_x$ of the magnetic field B as seen over the measuring time T, represented by a function $B_x(t)$; and a second magnetic component $B_y$ of the magnetic field B as seen over the measuring time T, represented by a function $B_y(t)$. The first magnetic component $B_x$ is a

projection of the magnetic field B on the first plane vector x. The second magnetic component $B_y$ is a projection of the magnetic field B on the second plane vector y. The function $\alpha(t)$ may according to this approach be defined as $\alpha(t) = \arctan(B_x(t)/B_y(t))$.

By this features, the function $\alpha(t)$ may be determined in an easy manner.

The magnetic field B may be measured by measuring components of the magnetic field, such as the first and second magnetic components $B_x$ and $B_y$. Components of the magnetic field B may be measured directly by the magnetometer.

Preferably, the first plane vector x is arranged substantially in the travelling direction of the passing vehicle.

Preferably, the second plane vector y is arranged in the plane of the surface on which the passing vehicle is travelling.

The magnetic class of the passing vehicle may be determined by quantizing and normalizing said at least a part of the generated magnetic signal B(t). The quantizing and normalizing may be performed before comparing said at least a part of the generated magnetic signal B(t) against the plurality of predetermined reference magnetic signals in the database. In such an embodiment, the predetermined reference magnetic signals in the database have been quantized and normalized correspondingly.

By quantizing the magnetic signal B(t) and the reference magnetic signals, the comparison between the magnetic signal B(t) and the reference magnetic signals may be performed in an easier manner. The reference magnetic signals may be quantized and stored as quantized values in the database on beforehand.

By normalizing the magnetic signal B(t) and the reference magnetic signals, the comparison between the magnetic signal B(t) and the reference magnetic signals may be performed without the need for taking different strengths of the magnetic signals into account. It may be sufficient to compare only the shape of the curves for the magnetic signal with the shapes of the curves for the reference magnetic signals, in order to determine the magnetic class of the passing vehicle.

The comparison between the magnetic signal B(t) and the reference magnetic signals may comprise determining a mathematical distance between the generated magnetic signal and each of the predetermined reference magnetic signals in the database. In this approach, the magnetic class of the passing vehicle is determined as the magnetic class represented by the predetermined reference magnetic signal which provides to the shortest of the determined mathematical distances.

By mathematical distance is meant a distance between two mathematical values. The mathematical distance may be determined using the Euclidian distance, also known as the Euclidian norm. Using the Euclidian distance is advantageous since it gives a good estimation of the distance relative to the required computational power. However, any other norm, i.e. 1-norm, 3-norm, 4-norm, etc. may be used for determining the mathematical distance.

In particular, the comparison between the magnetic signal B(t) and the reference magnetic signals may be performed by first quantizing the magnetic signal B(t) by dividing it into a plurality of bars over time, each bar covering a time window and having an average value for the magnetic signal B(t) in that time window. Secondly, the obtained average values are normalized in a limit [-1, 1]. The normalized average value are compared with the corresponding values for the reference magnetic signals in the database, by calculating the Euclidian distances between the normalized average values for the bars of the magnetic signal and the corresponding normalized values for each of the reference magnetic signals.

This method of comparison may be referred to as the Average-Bar method, and is disclosed in detail in "Traffic Surveillance by Wireless Sensor Networks: Final Report" by Cheung et al. (California PATH Research Report, January 2007).

In order to reduce the required computation power, a data compression method may be used. Thus, the number of values to be compared between the magnetic signal B(t) and each reference magnetic signal, in order to determine the shortest mathematical distance, may be reduced. An example of such a data compression method may be found in "Karhunen-Loeve Method for Data Compression and Speech Synreport" by Chen et al. (IEEE Proceedings-I, Vol. 138, No. 5, pp. 377-380, October 1991). The reduction of the number of values which need to be compared is advantageous when e.g. a microcontroller is utilized for performing the method.

Preferably, the beginning and end parts of the function $\alpha(t)$ are not considered when determining the magnetic time $T_m$. Thereby, any interferences or noise in these parts do not influence the determination. For example, the sensor may have a sensitivity zone which causes the beginning and end parts of the measured magnetic field to be noisy. By experiments, it has been shown that it is advantageous that at least one of the first limit angle $\lambda_1$ and second limit angle $\lambda_2$ lies in the interval of 30°-60°. In this interval, it is likely that the function $\alpha(t)$ is a one-to-one function, and thus the magnetic time $t_m$ may be uniquely defined.

In particular, it is advantage if both limit angles lies within the interval 30°-60°.

The first limit angle $\lambda_1$ and the second limit angle $\lambda_2$ may have the same absolute value. This provides an easier determination of the magnetic time.

The magnetometer may be an anisotropic and/or a magnetoresistive magnetometer.

The magnetometer may be arranged in or adjacent to a roadway. Thus, the magnetometer can measure the magnetic field B nearby the passing vehicle. This will generate a stronger and more distinct magnetic signal B(t).

The determined speed V of the passing vehicle may further be utilized for classifying the passing vehicle, thus obtaining more information about the vehicle. The classification may be achieved by determining a speed V of the vehicle according to the above disclosed method; generating, by an accelerometer, a vibration signal caused by the vehicle when passing the accelerometer; determining, based on the generated vibration signal, the number of wheel axles of the vehicle, and the elapsed time between the passing of adjacent wheel axles of the vehicle when passing the accelerometer; determining, based on the determined elapsed time between the passing of adjacent wheel axles of the vehicle and the determined speed V of the vehicle, the one or more wheelbases of the vehicle, and, if the vehicle has more than two wheel axles, the individual order between the wheelbases of the vehicle; and determining a vehicle class of the passing vehicle on the basis of the determined one or more wheelbases and the determined order of the one or more wheelbases.

By wheelbase is meant the distance between two subsequent wheel axles of a vehicle.

The concept of classifying a vehicle based on its vibration signal is disclosed in detail in "Feasibility of road vibration-based vehicle property sensing" by Hostettler et al. (IET Intelligent Transport Systems, 2010, Vol. 4, Iss. 4, pp. 356-364).

The classification method provides, together with the method of determining the speed of the passing vehicle, an easy-implemented method which may be performed using only two sensors, and is achievable by a single sensor node. Thus, the method may be implemented in a sensor device which may be small and easily arranged without disturbing the passing vehicle or its driver. Further, the driver may not even notice the sensor device, and thereby the sensor device does not take away the driver's attention from the road and any other traffic, which is important for maintaining the traffic safety. Furthermore, the method may be performed without any manual handling at all, making the method both cost efficient and safe.

The method may further comprise determining a wheelbase class for each of the determined one or more wheelbases of the passing vehicle, wherein each wheelbase class represents a length interval, and wherein the length intervals do not overlap each other.

The determining of the vehicle class may comprise a look-up in a classification table comprising vehicle classes. The vehicle classes may be standard vehicle classes, such as vehicle classes determined by a road authority.

The accelerometer and magnetometer may be arranged in the same sensor device. Thus, the method may be performed by a single device, which may be arranged in or adjacent to a roadway. Some of the advantages obtained by having only one node have been mentioned above, and apply also to the classification method. Further advantages include energy efficiency, since energy spent on communication between different nodes may be saved; reduced installation time and installation cost; less sources of errors; and that the need for synchronization between different nodes is removed.

According to a second aspect of the invention, the above mentioned and other objects are achieved by a sensor device which is adapted to perform the method for determining a speed V of a passing vehicle according to the first aspect.

The sensor device may further comprise an accelerometer, wherein the sensor device is further adapted to perform the method according to the above disclosed method for classifying a passing vehicle.

The above disclosed features and corresponding advantages of the first aspect is also applicable to this second aspect. To avoid undue repetition, reference is made to the discussion above.

It is noted that the invention relates to all possible combinations of features recited in the claims.

BRIEF DESCRIPTION OF THE DRAWINGS

This and other aspects of the present invention will now be described in more detail, with reference to the enclosed drawings showing embodiments of the invention.

Figure 1 illustrates a method for determining a vehicle speed V of a passing vehicle.
Figure 2 illustrates a magnetometer arranged adjacent to a roadway for determining a speed of a passing vehicle.
Figure 3 illustrates a sensor device for performing the method for determining a vehicle speed of a passing vehicle.
Figure 4a illustrates one example of a component of a magnetic signal B(t).
Figure 4b illustrates a function $\alpha(t)$ which has been determined based on a magnetic signal B(t).
Figure 5 illustrates a quantization of the component of a magnetic signal B(t) in figure 4a.
Figure 6 schematically illustrates a database comprising magnetic classes and predetermined reference magnetic signals.
Figure 7 illustrates a method for classifying a passing vehicle.
Figure 8a illustrates one example of a vibration signal.
Figure 8b illustrates the vibration signal in figure 8a after being processed.
Figure 9 illustrates a table comprising vehicles classes according to their wheelbases.

The figures are adapted for illustrative purposes and, thus, they are provided to illustrate the general concept of embodiments of the present invention. Like reference numerals refer to like elements throughout.

DETAILED DESCRIPTION OF PREFERRED EMBODIMENTS

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and for fully conveying the scope of the invention to the skilled person.

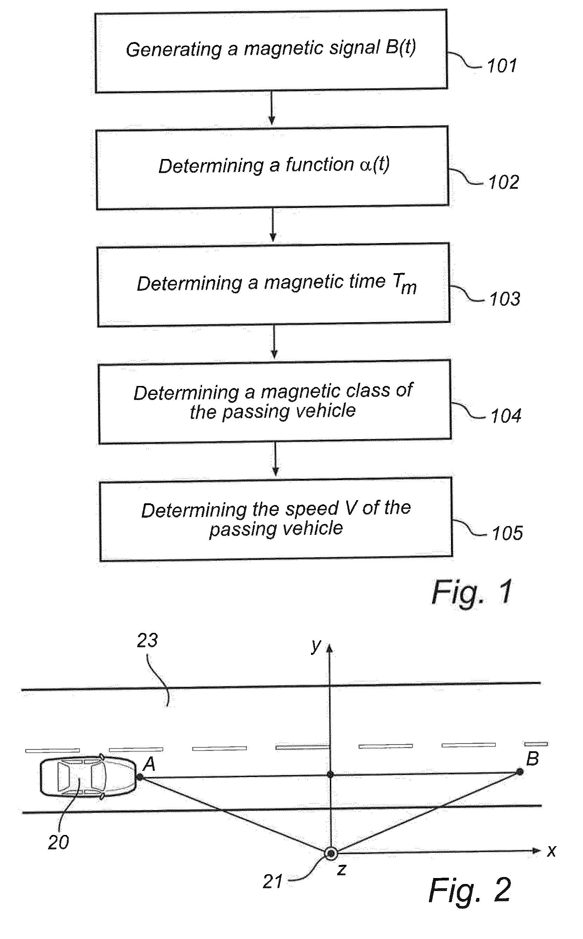

A method for determining a speed V of a passing vehicle 20 is illustrated in figure 1. The method will be described in detail with reference to figures 2-6.

The method is performed by use of a magnetometer 21 arranged adjacent to a roadway 23, as illustrated in figure 2. The magnetometer 21 is an anisotropic magnetoresistive magnetometer which measures the magnetic field surrounding the magnetometer 21. The magnetic field comprises many magnetic field components, such as the earth's magnetic field and magnetic fields of surrounding objects. The passing vehicle 20 is one such object. When the passing vehicle 20 passes the magnetometer 21, the magnetometer 21 generates a magnetic signal B(t), as denoted by 101 in figure 1. The magnetic signal B(t) comprises at least the magnetic field of the passing vehicle 20. The magnetometer 21 may for example measure only the magnetic field of the passing vehicle 20, or measure a total surrounding magnetic field comprising e.g. the earth's magnetic field and the magnetic field of the passing vehicle. The magnetometer may alternatively measure the total surrounding magnetic field, and filter the measurement for generating the magnetic signal B(t) only comprising the magnetic field of the passing vehicle.

The magnetometer 21 performs its measurement during a measuring time T. Thus, the magnetic signal B(t) comprises the function of the magnetic field B from t=0 to t=T, i.e. during the measuring time T. The passing vehicle 20 travels in a travelling direction from a position A to a position B, thus passing the magnetometer 21. The measuring time T is the time elapsed between the start of the measurement, i.e. when the passing vehicle 20 is located at position A representing t=0, and the end of the measurement, i.e. when the passing vehicle 20 is located at position B, represented by t=T. The locations of position A and position B may differ between different measurements.

The measurement is triggered by a detection of the passing vehicle 20. Different detections methods are feasible. One example is that the passing vehicle 20 is detected by the magnetometer 21. The detection range may in such an embodiment be about 6 meters from the magnetometer, thus providing a maximum distance of 12 meters between position A and position B. The passing vehicle 20 could alternatively be detected by an external device in connection to the magnetometer 21. The external sensor could be an optic sensor, such as a camera, whereby the passing vehicle 20 is detected before the magnetometer is able to sense the passing vehicle 20. The magnetometer 21 may be arranged to be triggered by the external sensor detecting the passing vehicle 20. Thus, the magnetometer 21 may be arranged in a sleep mode, and triggered to go into an active mode for performing the measurement on the passing vehicle 20. By detecting the passing vehicle 20 before it reaches the possible measurement area for the magnetometer 21, the magnetometer has time to power up from the sleep mode and go into its active mode.

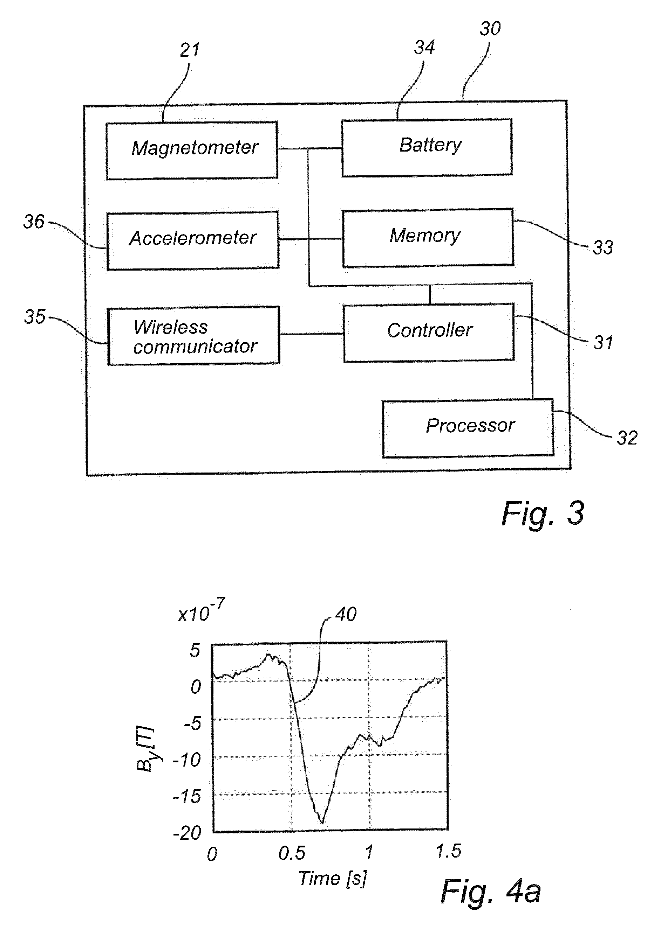

The magnetometer 21 forms a part of a sensor device 30, as illustrated in figure 3. The sensor device 30 further comprises a battery 34 to power the device, a memory 33 for storing data, a processor 32 for processing data, an accelerometer 36 for performing further measurements (as will be disclosed below), a controller 31 for controlling the sensors (e.g. activating the magnetometer 21), and a wireless communicator 35 for communicating data from and to external devices (such as an external sensor mentioned above). The sensor device 30 may thus be a stand-alone device, without the need for further physical connections. Since all components may be manufactured in a small format, the sensor device 30 may also be manufactured relatively small. The sensor device 30 may further comprise a solar cell (not illustrated) for providing power to the sensor device 30 and/or for charging the battery 34.

It is throughout the disclosure understood that the processor 32 is utilized for processing any data, and that the memory 33 is utilized for storing any determined data, if necessary. For any signal, a processed version of it or a characteristic value which is derived from the signal may be stored. Hence, it is not necessary that the exact signal is stored.

The magnetic field B is divided into components $B_x$, $B_y$, and $B_z$. The components are the projection of the magnetic signal B on vectors x, y, and z, respectively, which are illustrated in figure 2. The vector x is arranged in the travelling direction of the passing vehicle 20. The vector y is arranged orthogonal to the vector x, and across the lane of the roadway 23. The vector z is arranged orthogonal to the vectors x and y, and as a normal to the roadway 23.

Thus, the magnetic signal B(t) is divided into components $B_x(t)$, $B_y(t)$, and $B_z(t)$, being the components of the magnetic field B during the measuring time T.

The magnetic signal component $B_y(t)$ for this embodiment is schematically illustrated in figure 4a. The magnetic signal component $B_y(t)$ is denoted as 40. The magnetic field strength is given on the y axis and the time on the x axis. As can be seen, the measuring time T is, in this embodiment, 1.5 seconds.

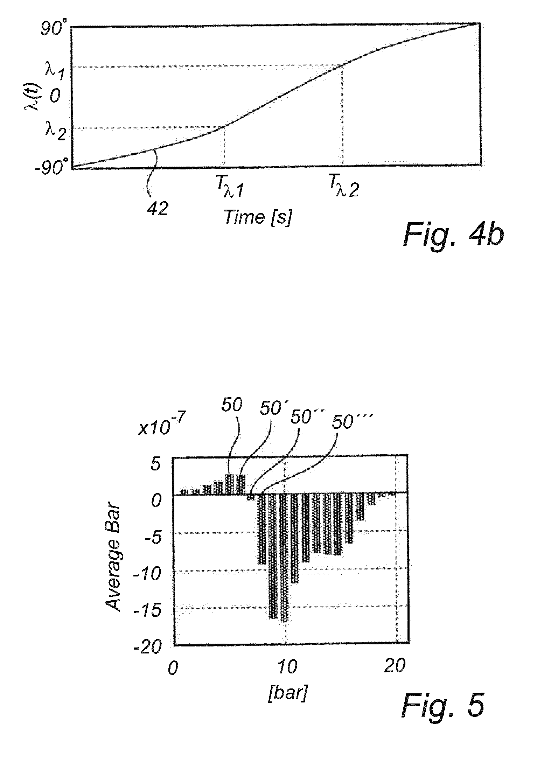

After generating 101 the magnetic signal B(t) and dividing the magnetic signal B(t) into components, a function $\alpha(t)$ is determined, as denoted by 102 in figure 1. The angle $\alpha$ is the argument of the polar representation of a projection of the magnetic field B on a plane defined by the vectors x and y which are arranged in the plane. At the moment of the vehicle 20 passing the magnetometer 21, the angle $\alpha$ will be equal to zero. The function $\alpha(t)$ is in this embodiment defined as $\alpha(t)=\arctan(B_x(t)/B_y(t))$. The function $\alpha(t)$ is illustrated in figure 4b, where the angle is given on the y axis and the time is given on the x axis.

A magnetic time $T_m$ is determined, as denoted by 103 in figure 1. The magnetic time $T_m$ is determined based on the function $\alpha(t)$ in figure 4b. A first limit angle $\lambda_1$ and a second limit angle $\lambda_2$ are predetermined for defining the magnetic time $T_m$. The limit angles are fixed values selected for cutting off the beginning and the end parts of the function $\alpha(t)$ in order to avoid any noise, errors, etc. which are commonly existing in the beginning and the end of the measurement. A limit angle within the interval 30°-60° is preferred in order to cut off the beginning and the end parts of the function $\alpha(t)$, without limiting the remaining part too much. In this embodiment, the absolute value of the limit angles is 40°. Since the function $\alpha(t)$ goes from a negative angle to a positive angle, the first limit angle $\lambda_1$ is -40°, and the second limit angle $\lambda_2$ is +40°.

The magnetic time $T_m$ is defined as $T_{\lambda 2} - T_{\lambda 1}$. $T_{\lambda 1}$ and $T_{\lambda 2}$ are given by the corresponding time for the limit angles $\lambda_1$ and $\lambda_2$, respectively, according to the function $\alpha(t)$, as illustrated in figure 4b.

It is noted that figure 4b is an illustrative example of a function $\alpha(t)$. The function $\alpha(t)$ could have a different shape, e.g. starting from a positive angle and going towards a negative angle or being influenced by noise or other signal disturbances.

Subsequent or parallel to determining 102 the function $\alpha(t)$ and determining 103 the magnetic time $T_m$, a magnetic class of the passing vehicle 20 is determined, as denoted by 104 in figure 1. Each of the magnetic signal components $B_x(t)$, $B_y(t)$, and $B_z(t)$ is quantized by dividing each signal into a plurality of bars. A quantization of the magnetic signal component $B_y(t)$ 40 in figure 4a is illustrated in figure 5. The value of each bar 50, 50', 50", 50'" is the average value for the part of the magnetic signal component $B_y(t)$ 40 represented by the bar.

It is noted that other approaches for quantization of the magnetic signal B(t) are feasible within the scope of the present invention. Examples of such approaches are polynomial approximations, orthonormal basis functions, and compressed sensing approaches. It is also noted that the quantization may be in the form of a transform.

Further, the quantization of each of the magnetic signal components $B_x(t)$, $B_y(t)$, and $B_z(t)$ is normalized. In this embodiment, the average bar values for each of the magnetic signal components are normalized in a limit [-1, 1].

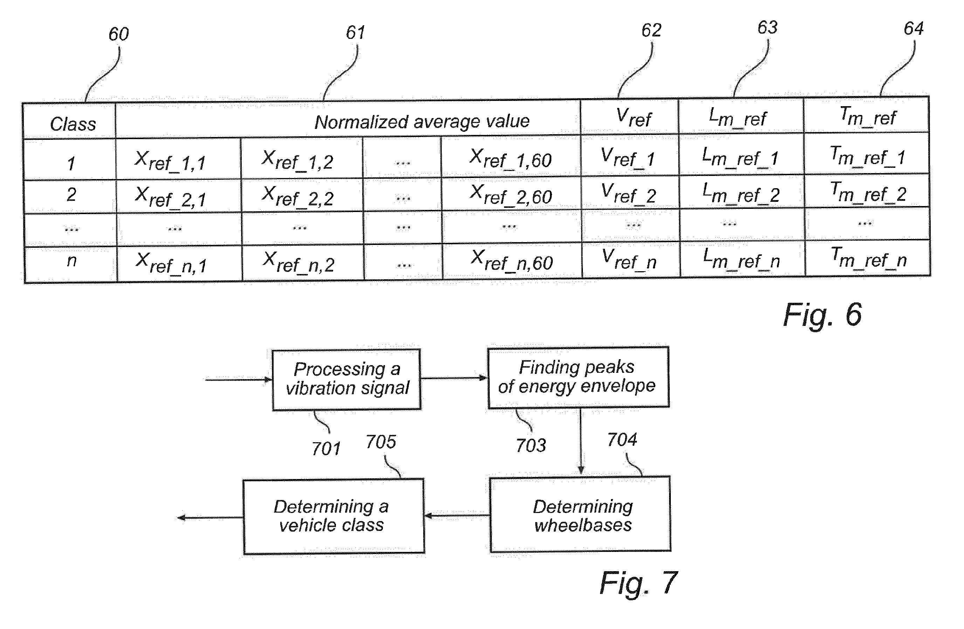

The quantized and normalized magnetic signal components are compared with a plurality of predetermined reference magnetic signals in a database. The database is schematically illustrated in figure 6.

The database comprises five columns: a magnetic class column 60, a normalized average value column 61, a reference speed $V_{ref}$ column 62, a reference magnetic length $L_{m\_ref}$ column 63, and a reference magnetic time $T_{m\_ref}$ column 64.

The magnetic class column 60 defines which magnetic class each row represents. The magnetic classes could be indicated by numbers, as in this embodiment, or by any other suitable indicator such that the magnetic class has a unique reference relative to the other magnetic classes.

The number of magnetic classes may be different in different embodiments. A higher number of magnetic classes may provide a more accurate speed determination.

The normalized average value column 61 comprises the average bar values for the quantized and normalized values for the predetermined reference magnetic signal for each class. Each of the reference magnetic signal components $B_x(t)$, $B_y(t)$, and $B_z(t)$ has been quantized by being divided into 20 bars. Each row of the normalized average value column 61 contains the 20 bar values for each of the three reference magnetic signal components, i.e. 60 bar values in total for each reference magnetic signal.

A class may in other embodiments comprise more than one reference magnetic signal. The number of bars for the quantization could of course also differ between different embodiments.

The reference speed $V_{ref}$ column 62 comprises the speed corresponding to the reference magnetic signal of the particular row. The reference speed $V_{ref}$ has been measured by means of the magnetometer or by another speed estimation method.

The reference magnetic length $L_{m\_ref}$ column 63 comprises the magnetic length corresponding to the reference magnetic signal of the particular row.

The reference magnetic time $T_{m\_ref}$ column 64 comprises the reference magnetic time corresponding to the reference magnetic signal of the particular row.

The reference speed $V_{ref}$, reference magnetic length $L_{m\_ref}$ and the reference magnetic time $T_{m\_ref}$ are mutually connected according to $V_{ref}=L_{m\_ref}/T_{m\_ref}$.

Each of the quantized and normalized magnetic signal components are compared against each of the classes in the database. This is achieved by determining a mathematical distance between each bar value of each magnetic signal component with the corresponding bar value for a corresponding reference magnetic signal component in the database. A total mathematical distance between the magnetic signal components for the passing vehicle and each of the reference magnetic signals is determined by calculating a Euclidian distance (also known as a 2-norm distance) according to:

$$\sqrt{\sum_{i=1}^{60} \left( x_{measured} - x_{ref} \right)^2}$$

where $X_{measured}$ is the bar value for the magnetic signal component for the passing vehicle, and $X_{ref}$ is the corresponding bar value for the reference magnetic signal.

Thus, a Euclidian distance is determined between the magnetic signal for the passing vehicle and each of the reference magnetic signals in the database. The magnetic class of the passing vehicle is determined as the magnetic class represented by the reference magnetic signal which provides the shortest Euclidian distance.

After the magnetic class and the magnetic time $T_m$ have been determined, the speed V of the passing vehicle is determined, as denoted by 105 in figure 1.

From the database, the reference speed $V_{ref}$ and reference length $L_{m\_ref}$ and/or reference time $T_{m\_ref}$ for the determined magnetic class are extracted. The speed V of the passing vehicle is determined as V = $(T_{m\_ref} \cdot V_{ref})/T_m$. An equal determination using the reference length $L_{m\_ref}$ is also feasible, which is a straightforward extension and included within the scope of the claims. As an example, the speed V of the passing vehicle can also be determined as V = $L_{m\_ref}/T_m$.

In one embodiment, the passing vehicle is further classified by use of the determined speed V. The classification method is illustrated in figure 7.

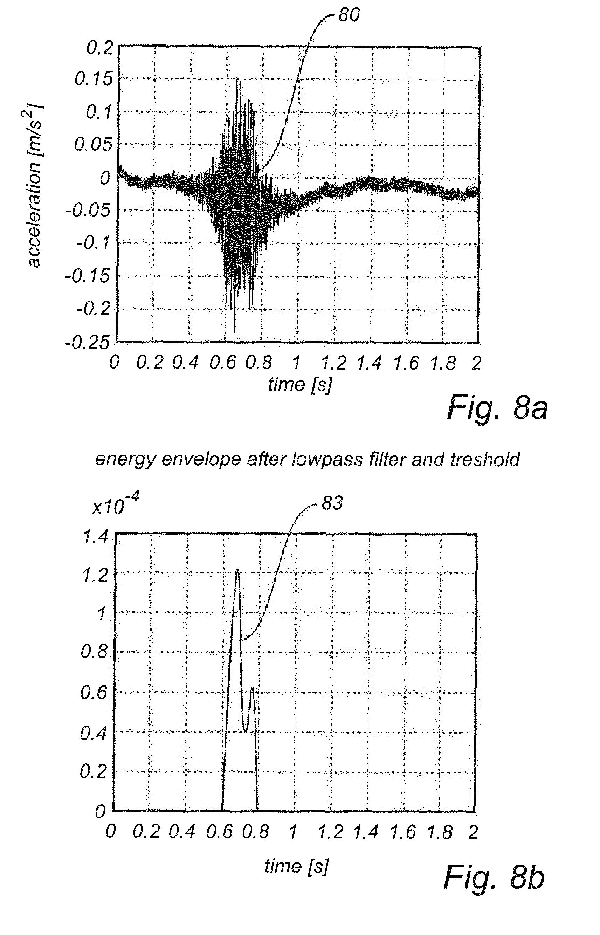

The speed V is determined according to the above disclosed method illustrated in figure 1. Further, a vibration signal 80, schematically illustrated in figure 8a, is measured by use of the accelerometer 36. In figure 8a, the y axis represents the acceleration and the x axis represents the time. The vibration signal 80 is caused by the vehicle 20 when passing the accelerometer 36 in the sensor device 30.

The measuring time for the vibration signal 80, i.e. 2 seconds in this example, does not need to be the same as the measuring time T for the measurement of the magnetic signal B(t). The magnetometer 21 and the accelerometer 36 may perform their measurements independent of, or in connection to, each other.

The vibration signal 80 is processed, as denoted by 701. The processing includes filtering, squaring, smoothing, thresholding and/or interpolating the vibration signal. A processed vibration signal 83, based on the vibration signal 80, is schematically illustrated in figure 8b. The processing is performed by the processor 32.

Based on the processed vibration signal 83, peaks of the processed vibration signal curve are determined, as denoted by 703. The peaks in figure 8b correspond to the passing of each wheel axle of the passing vehicle 20. As can be seen, the processed vibration signal 83 has two peaks which correspond to two wheel axles of the passing vehicle 20.

By the speed V, the wheelbase of the vehicle is determined, as denoted by 704. Each wheelbase is formed between two subsequent wheel axles, i.e. two subsequent peaks. If two or more wheelbases are determined, also the number of wheelbases and their relative order are determined and stored.

If the distance between the peaks together with the speed of the vehicle is unrealistic for a vehicle, e.g. being below 60 centimeters, the vibration signal does not correspond to a vehicle or is influenced by noise or other interferences. If the vibration signal is determined to not correspond to a vehicle, the method may be interrupted.

Finally, a vehicle class for the passing vehicle is determined, as denoted by 705. In this embodiment, the classification of vehicles is a predetermined classification depending on the vehicle type. Examples of classes are motorcycle, passenger car, passenger car with trailer, truck with two wheel axles, truck with three wheel axles, truck with trailer, etc.

The determination of vehicle class is performed based on the wheelbases, i.e. the length between the wheel axles of the passing vehicle 20, and the order of the wheelbases if the passing vehicle 20 has two or more. The wheelbases are classified into wheelbase types according to their size. In this embodiment, the following classification of wheelbases are utilized:

| Wheelbase type | Wheelbase interval [m] |
|---|---|
| A | 0-0.80 |
| B | 0.80-1.8 |
| C | 1.8-3.3 |
| D | 3.3-6.0 |
| E | 6.0-11 |

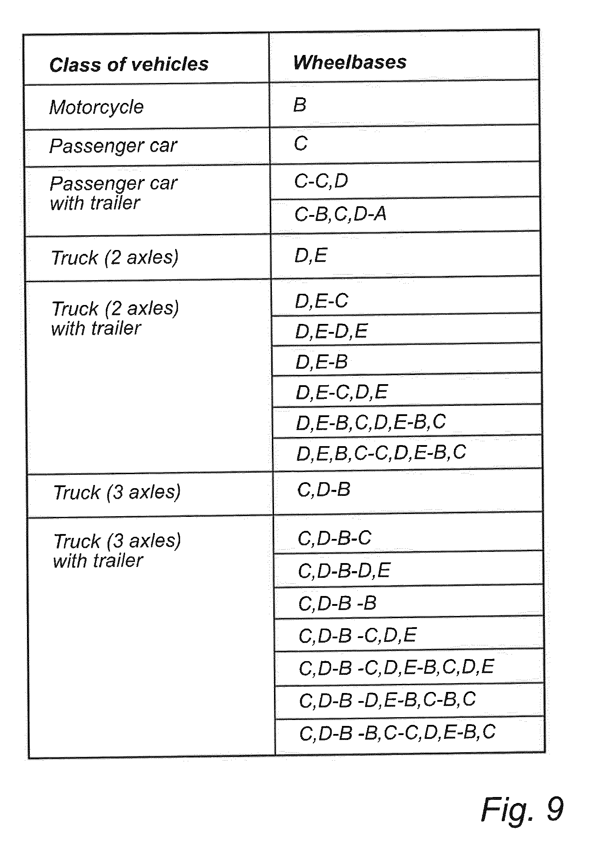

A vehicle class corresponds to a certain number of wheelbases, wherein each is of a certain wheelbase class. A table comprising the vehicle classification for this embodiment is illustrated in figure 9. It is understood that the table of figure 9 is only one example of many different classifications which may be utilized for the classification. This particular classification is based on a Swedish standard classification.

As can be seen in the table of figure 9, the vehicle class "Motorcycle" corresponds to a vehicle having one wheelbase which is of the wheelbase type B. Another example is the vehicle class "Passenger car with trailer" which can have two or three wheelbases, depending on if the trailer has one or two wheel axles. Where the trailer has one wheel axle, the number of wheelbases are two: the first wheelbase is of the wheelbase class C, and the second wheelbase is of the wheelbase class C or D. Where the trailer has two wheel axles, the number of wheelbases are three: the first wheelbase is of the wheelbase class C, the second wheelbase is of the wheelbase class B, C, or D, and the third wheelbase is of the class A.

For the vibration signal 80, corresponding to the passing vehicle 20 in this embodiment, the wheelbase, i.e. the distance between the peaks of the processed vibration signal 83, is 3.1 meters. Thus, the number of wheelbases is one, and the wheelbase class is C for the single wheelbase. Hence, by a look-up in the table in figure 9, the vehicle class "Passenger car" is determined to be the vehicle class of the passing vehicle 20. The look-up may be performed by the processor 32 and the table may be stored in the memory 33.

Hence, both the speed V and vehicle class of the passing vehicle may be determined by the sensor device 30.

In summary, this application discloses method for determining a speed V of a vehicle passing a magnetometer. The method comprises: generating a magnetic signal B(t), determining a function $\alpha(t)$, wherein $\alpha$ is the argument of a polar representation of a projection of the magnetic field B on a plane, determining a magnetic time based on the function $\alpha(t)$; determining a magnetic class of the passing vehicle by comparing at least a part of the generated magnetic signal B(t) against a plurality of predetermined reference magnetic signals, determining the speed V of the vehicle based on the magnetic time of the vehicle, and a reference magnetic time and a reference speed corresponding to the determined magnetic class. The application also discloses a method for classifying a vehicle based on the determined speed V. Further, the application discloses a sensor device for performing the disclosed methods.

The person skilled in the art realizes that the present invention by no means is limited to the preferred embodiments described above. On the contrary, many modifications and variations are possible within the scope of the appended claims. For example, determining the magnetic time $T_m$ and determining the magnetic class of the passing vehicle may be performed in a different order, such as in parallel to each other; or the different functions and component, such as processor and memory, may be arranged externally from the device comprising the sensors.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

**Claims**

1. A method for determining a speed V of a vehicle (20) passing a magnetometer (21), the method comprising:

generating (101), during a measuring time T and by the magnetometer, a magnetic signal B(t) by measuring a magnetic field B during the measuring time T, the magnetic field B comprising a magnetic field of the passing vehicle;
determining (102) a function $\alpha(t)$ of an angle $\alpha$ over the measuring time T, wherein $\alpha$ is the argument of a polar representation of a projection of the magnetic field B on a plane in which a first plane vector x and a second plane vector y is arranged, wherein the first plane vector x and the second plane vector y are mutually orthogonal, and wherein the first plane vector x is arranged at least partly in a travelling direction of the passing vehicle;
determining (103) a magnetic time $T_m$ defined as $T_m = T_{\lambda 2} - T_{\lambda 1}$ where $\lambda_1 = \alpha(T_{\lambda 1})$ and $\lambda_2 = \alpha(T_{\lambda 2})$, and where $\lambda_1$ is a first limit angle and $\lambda_2$ is a second limit angle;
determining (104) a magnetic class of the passing vehicle by comparing at least a part of the generated magnetic signal B(t) against a plurality of predetermined reference magnetic signals in a database, wherein each predetermined reference magnetic signal represents a specific magnetic class;
determining (105) the speed V of the vehicle as $V = (T_{m\_ref} \cdot V_{ref})/T_m$ where $T_{m\_ref}$ is a reference magnetic time of the predetermined reference magnetic signal of the determined magnetic class, and $V_{ref}$ is a reference speed of the predetermined reference magnetic signal of the determined magnetic class.

2. The method according to claim 1, wherein the magnetic signal B(t) comprises:

a first magnetic component $B_x$ of the magnetic field B as seen over the measuring time T, represented by a function $B_x(t)$; and
a second magnetic component $B_y$ of the magnetic field B as seen over the measuring time T, represented by a function $B_y(t)$;
wherein the first magnetic component $B_x$ is a projection of the magnetic field B on the first plane vector x;
wherein the second magnetic component $B_y$ is a projection of the magnetic field B on the second plane vector y; and
wherein $\alpha(t)$ is defined as $\alpha(t) = \arctan(B_x(t)/B_y(t))$.

3. The method according to any of the claims 1-2, wherein the first plane vector x is arranged substantially in the travelling direction of the passing vehicle.

4. The method according to any of the claims 1-3, wherein the second plane vector y is arranged in the plane of the surface (23) on which the passing vehicle is travelling.

5. The method according to any of the claims 1-4, wherein determining of the magnetic class of the passing vehicle further comprises:

quantizing and normalizing said at least a part of the generated magnetic signal B(t);
wherein the quantizing and normalizing are performed before comparing said at least a part of the generated magnetic signal B(t) against the plurality of predetermined reference magnetic signals in the database; and
wherein the predetermined reference magnetic signals in the database have been quantized and normalized correspondingly.

6. The method according to any of the claims 1-5, wherein comparing at least a part of the generated magnetic signal B(t) against the plurality of predetermined reference magnetic signals comprises determining a mathematical distance between the generated magnetic signal and the predetermined reference magnetic signals in the database; and
wherein the magnetic class of the passing vehicle is determined as the magnetic class represented by the predetermined reference magnetic signal which provides to the shortest of the determined mathematical distances.

7. The method according to any of the claims 1-6, wherein $\lambda_1$ has a negative value and $\lambda_2$ has a positive value.

8. The method according to any of the claims 1-7, wherein at least one of the first limit angle $\lambda_1$ and the second limit angle $\lambda_2$ has an absolute value in the interval of 30°-60°.

9. The method according to any of the claims 1-8, wherein $\lambda_1$ and $\lambda_2$ have the same absolute value.

10. The method according to any of the claims 1-9, wherein the magnetometer is an anisotropic and magnetoresistive magnetometer.

11. The method according to any of the claims 1-10, wherein the magnetometer is arranged in or adjacent to a roadway (23).

12. A method for classifying a vehicle (20) based on its one or more wheelbases, the method comprising:

determining a speed V of the vehicle according to any of the claims 1-11;
generating, by an accelerometer (36), a vibration signal (80) caused by the vehicle when passing the accelerometer;
determining, based on the generated vibration signal, the number of wheel axles of the vehicle, and the elapsed time between the passing of adjacent wheel axles of the vehicle when passing the accelerometer;
determining (704), based on the determined elapsed time between the passing of adjacent wheel axles of the vehicle and the determined speed V of the vehicle, the one or more wheelbases of the vehicle, and, if the vehicle has more than two wheel axles, the individual order between the wheelbases of the vehicle; and
determining (705) a vehicle class of the passing vehicle on the basis of the determined one or more wheelbases and the determined order of the one or more wheelbases.

13. The method according to claim 12, wherein the accelerometer and the magnetometer are arranged within a single device (30).

14. A sensor device (30) comprising a magnetometer (21), wherein the sensor device is adapted to perform the method according to any of the claims 1-11.

15. The sensor device according to claim 14, further comprising an accelerometer (36), wherein the sensor device is further adapted to perform the method according to any of the claims 12-13.

Generating a magnetic signal B(t) — 101

Determining a function α(t) — 102

Determining a magnetic time $T_m$ — 103

Determining a magnetic class of the passing vehicle — 104

Determining the speed V of the passing vehicle — 105

*Fig. 1*

*Fig. 2*

Fig. 3

Fig. 4a

Fig. 4b

Fig. 5

| Class | Normalized average value | | | | $V_{ref}$ | $L_{m\_ref}$ | $T_{m\_ref}$ |
|---|---|---|---|---|---|---|---|
| 1 | $X_{ref\_1,1}$ | $X_{ref\_1,2}$ | ... | $X_{ref\_1,60}$ | $V_{ref\_1}$ | $L_{m\_ref\_1}$ | $T_{m\_ref\_1}$ |
| 2 | $X_{ref\_2,1}$ | $X_{ref\_2,2}$ | ... | $X_{ref\_2,60}$ | $V_{ref\_2}$ | $L_{m\_ref\_2}$ | $T_{m\_ref\_2}$ |
| ... | ... | ... | ... | ... | ... | ... | ... |
| $n$ | $X_{ref\_n,1}$ | $X_{ref\_n,2}$ | ... | $X_{ref\_n,60}$ | $V_{ref\_n}$ | $L_{m\_ref\_n}$ | $T_{m\_ref\_n}$ |

60 61 62 63 64

Fig. 6

701 705 703 704

Processing a vibration signal → Finding peaks of energy envelope → Determining wheelbases → Determining a vehicle class

Fig. 7

EP 2 677 323 A1

Fig. 8a

energy envelope after lowpass filter and treshold

Fig. 8b

| Class of vehicles | Wheelbases |
|---|---|
| Motorcycle | B |
| Passenger car | C |
| Passenger car with trailer | C-C,D |
| | C-B,C,D-A |
| Truck (2 axles) | D,E |
| Truck (2 axles) with trailer | D,E-C |
| | D,E-D,E |
| | D,E-B |
| | D,E-C,D,E |
| | D,E-B,C,D,E-B,C |
| | D,E,B,C-C,D,E-B,C |
| Truck (3 axles) | C,D-B |
| Truck (3 axles) with trailer | C,D-B-C |
| | C,D-B-D,E |
| | C,D-B -B |
| | C,D-B -C,D,E |
| | C,D-B -C,D,E-B,C,D,E |
| | C,D-B -D,E-B,C-B,C |
| | C,D-B -B,C-C,D,E-B,C |

Fig. 9

Europäisches
Patentamt

European
Patent Office

Office européen
des brevets

## EUROPEAN SEARCH REPORT

**Application Number**

EP 12 17 2521

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 3 860 869 A (PARKS JACK G) 14 January 1975 (1975-01-14) * the whole document * | 1-15 | INV. G01P3/66 G08G1/042 |
| A | US 5 331 276 A (POLVANI DONALD G [US] ET AL) 19 July 1994 (1994-07-19) * the whole document * | 1-15 | |
| A | DE 199 41 003 A1 (VOLKSWAGEN AG [DE]) 1 March 2001 (2001-03-01) * the whole document * | 1-15 | |
| A | FR 2 955 180 A1 (COMMISSARIAT ENERGIE ATOMIQUE [FR]) 15 July 2011 (2011-07-15) * page 5, line 2 - page 7, line 8; figures 1, 2 * | 1-15 | |
|  | | | **TECHNICAL FIELDS SEARCHED (IPC)** |
|  | | | G01P G08G |

The present search report has been drawn up for all claims

| Place of search | Date of completion of the search | Examiner |
|---|---|---|
| Munich | 8 November 2012 | Springer, Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 12 17 2521

This annex lists the patent family members relating to the patent documents cited in the above-mentioned European search report.
The members are as contained in the European Patent Office EDP file on
The European Patent Office is in no way liable for these particulars which are merely given for the purpose of information.

08-11-2012

| Patent document cited in search report | | Publication date | Patent family member(s) | | Publication date |
|---|---|---|---|---|---|
| US 3860869 | A | 14-01-1975 | NONE | | |
| US 5331276 | A | 19-07-1994 | NONE | | |
| DE 19941003 | A1 | 01-03-2001 | NONE | | |
| FR 2955180 | A1 | 15-07-2011 | EP<br>FR<br>WO | 2521921 A1<br>2955180 A1<br>2011083149 A1 | 14-11-2012<br>15-07-2011<br>14-07-2011 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JOHANSSON et al.** Magnetic Sensors for Traffic Detection. *Technical Report,* 2006
- **CHEUNG et al.** Traffic Surveillance by Wireless Sensor Networks: Final Report. *California PATH Research Report,* January 2007

- **CHEN et al.** Karhunen-Loeve Method for Data Compression and Speech Synreport. *IEEE Proceedings-I,* October 1991, vol. 138 (5), 377-380
- **HOSTETTLER et al.** Feasibility of road vibration-based vehicle property sensing. *IET Intelligent Transport Systems,* 2010, vol. 4 (4), 356-364